# EUROPEAN PATENT SPECIFICATION

(11) **EP 1 893 314 B1**
(45) Date of publication and mention of the grant of the patent: **18.11.2009**
(21) Application number: 06850428.1
(22) Date of filing: 15.12.2006
(51) Int. Cl.: A63H 27/133, B64C 27/43, B64C 27/82, B64C 27/625

(54) **HELICOPTER**
HELIKOPTER
HÉLICOPTÈRE

(30) Priority: 19.01.2006 BE 200600043; 03.08.2006 US 462177; 18.08.2006 US 465781
(43) Date of publication of application: 05.03.2008
(73) Proprietor: Silverlit Toys Manufactory Ltd, Hong Kong (HK)
(72) Inventor: VON DE ROSTYNE, Alexander, Jozef Magdalena, B-2880 Bornem (BE)
(74) Representative: Petraz, Gilberto Luigi
(86) International application number: PCT/US2006/047982
(87) International publication number: WO 2007/126426

(56) References cited:
- DE-A1- 4 017 402
- DE-U1- 9 414 652
- GB-A- 272 871
- GB-A- 956 536
- US-A- 5 906 476

## Description

### BACKGROUND

The present disclosure concerns an improved helicopter.

The disclosure concerns a helicopter generally. In particular, but not exclusively, it is related to a toy helicopter and in particular to a remote-controlled model helicopter or a toy helicopter.

### SUMMARY

lt known that a helicopter is a complex machine which is unstable and as a result difficult to control, so that much experience is required to safely operate such helicopters without mishaps.

Typically, a helicopter includes a body, a main rotor and a tail rotor.

The main rotor provides an upward force to keep the helicopter in the air, as well as a lateral or forward or backward force to steer the helicopter in required directions. This can be by making the angle of incidence of the propeller blades of the main rotor vary cyclically at every revolution of the main rotor.

The main rotor has a natural tendency to deviate from its position, which may lead to uncontrolled movements and to a crash of the helicopter if the pilot loses control over the steering of the helicopter.

Solutions to slow down the effect have already been provided up to now, including the application of stabilizing rods and weights at the tips of the propeller blades.

All these solutions make use of the known phenomenon of gyroscopic precession caused by the Coreolis force and the centrifugal forces to obtain the desired effect.

The tail rotor is not at all insensitive to this phenomenon, since it has to prevent the body to turn round the drive shaft of the rotor as a result of the resistance torque of the rotor on the body.

To this end, the tail rotor is erected such that it develops a lateral thrust which has to counteract the above-mentioned resistance torque of the rotor and the helicopter is provided with means which have to enable the pilot to control the lateral thrust so· as to determine the flight position round the vertical axis.

Since the tail of the helicopter tends to turn round the drive shaft of the main rotor, even in case of small variations in the drive torque of the main rotor, most helicopters are provided with a separate and autonomous mechanical or electromechanical system such as a gyroscope or the like which automatically compensates the thrust of the tail rotor for the unwanted rotations.

In general, the stability of a helicopter includes the result of the interaction between:
the rotation of the rotor blades; the movements of any possible stabilizing rods; compensation of the resistance torque of the main rotor by means of the tail rotor;
the system such as a gyroscope or the like to compensate for small undesired variations in the resistance torque of the main rotor; and
control of the helicopter which controls the rotational speed of the main rotor and of the tail rotor.

When these elements are essentially in balance, the pilot should be able to steer the helicopter as desired.

This does not mean, however, that the helicopter can fly by itself and can thus maintain a certain flight position or maneuver, for example, hovering or making slow movements without the intervention of a pilot.

Moreover, flying a helicopter usually requires intensive training and much experience of the pilot, for both a full size operational real helicopter as well as a toy helicopter or a remote-controlled model helicopter.

Document US-A-5,906,476 discloses a main rotor system for helicopters having the features described in the preamble of claim 1 of the present application. This known system comprises a swashplate including a bearing, a first race member including a channel, a second race member including a channel, and a third race member including a channel. The channels of the first, second and third race members cooperate to form a bearing-receiving slot. The bearing is positioned to lie in the bearing-receiving slot. The first and second race members are adjustably coupled to change the respective positions of their channels.

Document US-A-5,879,131 discloses a main rotor system for model helicopter including rotor blades having an inboard section and an outoboard section. The inboard section includes a higher chamber, thin, wide airfoils, and greater pitch and camber relative to the outboard section. The rotor blades also include a blade body that is semiflexible to bend during a crash landing of the model helicopter. Fig. 16B of US-A-5,879,131 shows a conventional blade with an upper convex surface and a lower concave surface in the direction of rotation.

The helicopter according to the present invention further comprises the features, disclosed in the characterising portion of claim 1.

The present disclosure aims to minimize one or several of the above-mentioned and other disadvantages by providing a simply and cheap solution to auto stabilize the helicopter, such that operating the helicopter becomes simpler and possibly reduces the need for long-standing experience of the pilot.

The helicopter should meet the following requirements to a greater or lesser degree:
(a) it can return to a stable hovering position, in case of an unwanted disturbance of the flight conditions. Such disturbance may occur in the form of a gust of wind, turbulences, a mechanical load change of the body or the rotors, a change of position of the body as a result of an adjustment to the cyclic variation of the pitch or angle of incidence of the propeller blades of the main rotor or a steering of the tail rotor or the like with a similar effect; and
(b) the time required to return to the stable position should be relatively short and the movement of the helicopter should be relatively small.

To this end, the disclosure concerns an improved helicopter including a body with a tail; a main rotor with propeller blades which are driven by a rotor shaft and which are hinge-mounted to the rotor shaft by means of a joint. The angle between the surface of rotation of the main rotor and the rotor shaft may vary. A tail rotor is driven by a second rotor shaft which is directed transversal to the rotor shaft of the main rotor.

The helicopter is provided with an auxiliary rotor which is driven by the shaft of the main rotor and which is provided with two vanes extending essentially in line with their longitudinal axis. The'longitudinal' axis is seen in the sense of rotation of the main rotor, and is essentially parallel to the longitudinal axis of at least one of the propeller blades of the main rotor or is located within a relatively small acute angle with the latter propeller blade axis. This auxiliary rotor is provided in a swinging manner on an oscillatory shaft which is provided essentially transversal to the rotor shaft of the main rotor. This is directed essentially transverse to the longitudinal axis of the vanes. The main rotor and the auxiliary rotor are connected to each other through a mechanical link, such that the swinging motions of the auxiliary rotor control the angle of incidence of at least one of the propeller blades of the main rotor.

In practice, it appears that such an improved helicopter is more stable and stabilizes itself relatively quickly with or without a restricted intervention of the user.

According to different aspect of the disclosure, the helicopter is made more stable by suspending the tail rotor with its rotor shaft in a swing which can rotate round a swing shaft. The swing shaft essentially extends in the longitudinal direction relative to the body of the helicopter.

In case of malfunction or the like, whereby the helicopter starts to turn round the rotor shaft of the main rotor in an unwanted manner, the tail rotor, as a result of the gyroscopic precession acting on the rotating tail rotor as a result of the rotation round the rotor shaft of the main rotor, should tilt round the swing shaft of the tail rotor at a certain angle.

By measuring the relative angular displacement of the swing and by using the measured signal as an input signal for a microprocessor which controls the drive of the main rotor and the drive of the tail rotor as a function of a stabilizer algorithm, the thrust of the tail rotor can be adjusted so as to counteract the unwanted effect of the disturbance and to thus automatically restore the stable flight conditions for the helicopter, with minimal or any intervention of the pilot.

The main rotor with propeller blades is driven by a rotor shaft on which the blades are mounted. The auxiliary rotor is driven by the rotor shaft of the main rotor and is provided with vanes from the rotor shaft in the sense of rotation of the main rotor.

The auxiliary rotor is mounted in a swinging relationship on an oscillatory shaft and the swinging motion being relatively upwardly and downwardly about the auxiliary shaft. The auxiliary shaft is provided essentially transverse to the rotor shaft of the main rotor. The main rotor and the auxiliary rotor are connected to each other by a mechanical link, such that the swinging motion of the auxiliary rotor controls the angle of incidence of at least one of the propeller blades of the main rotor.

The angle of incidence of the rotor in the plane of rotation of the rotor and the rotor shaft may vary; and an auxiliary rotor rotatable with the rotor shaft is for relative oscillating movement about the rotor shaft. Different relative positions are such that the auxiliary rotor causes the angle of incidence the main rotor to be different. A linkage between the main and auxiliary rotor causes changes in the position of the auxiliary rotor to translate to changes in the angle of incidence.

The propeller blades of the main rotor and the vanes of the auxiliary rotor respectively are connected to each other with a mechanical linkage that permits the relative movement between the blades of the propeller and the vanes of the auxiliary rotor.

There are wings directed transversely of a longitudinal axis of the helicopter body directed transversely and downwardly and a downwardly directed stabilizer at the tail of the helicopter. This facilitates stability on the ground.

### DRAWINGS

In order to further explain the characteristics of the disclosure, the following embodiments of an improved helicopter according to the disclosure are given as an example only, without being limitative in any way, with reference to the accompanying drawings, in which:

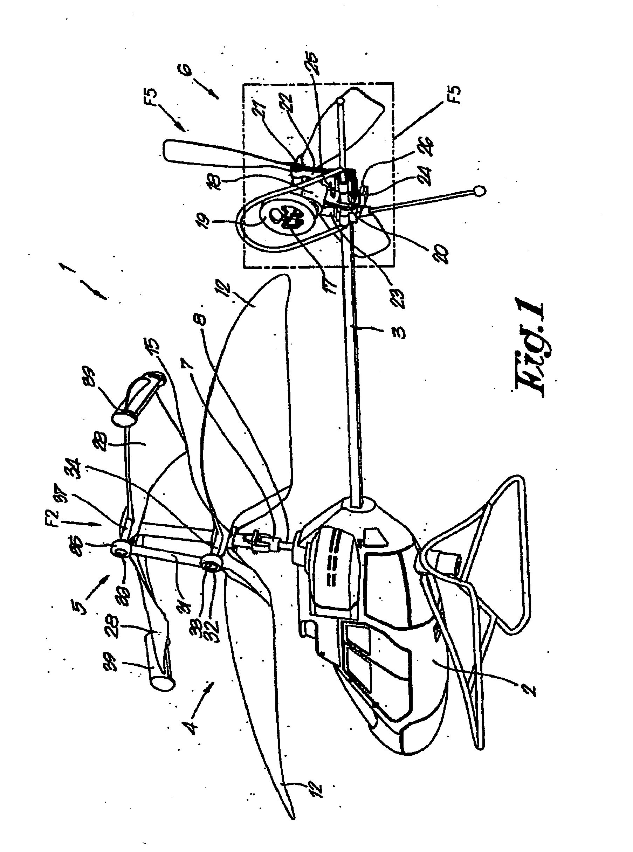

Figure 1 schematically represents a helicopter according to the disclosure in perspective;
Figure 2 represents a top view according to arrow F2 in Figure 1;

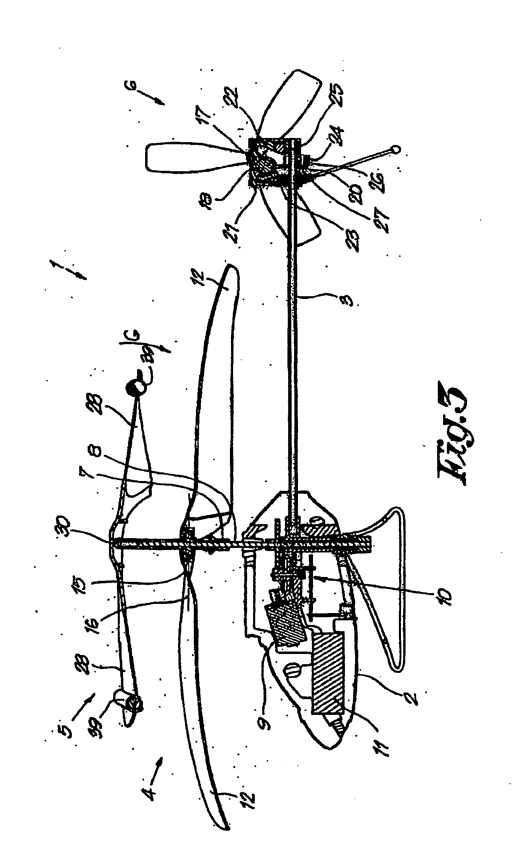

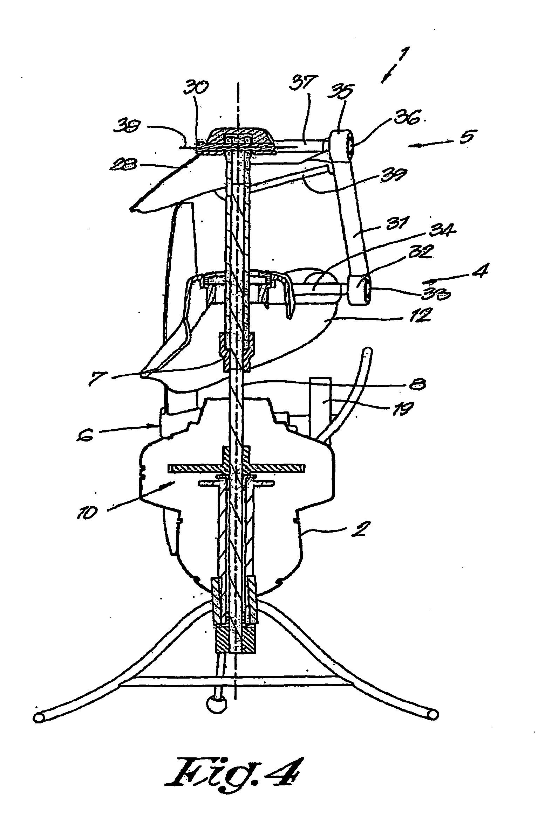

Figures 3 and 4 represent respective sections according to lines II-II and III-III in Figure 2;

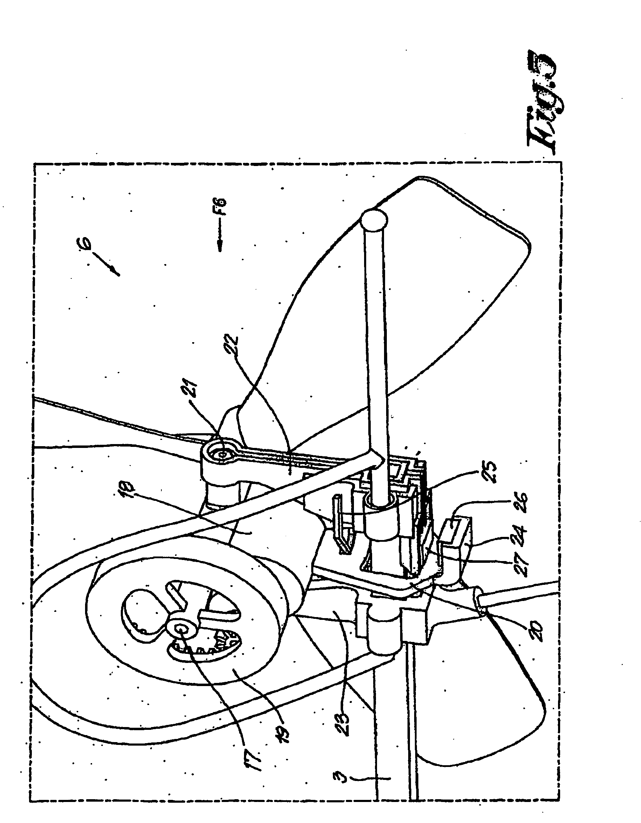

Figure 5 represents a view of the rear rotor part indicated in Figure 1 by F5 to a larger scale;
Figure 6 is a rear view according to arrow F6 in Figure 5;
Figure 7 represents a variant of Figure 1;

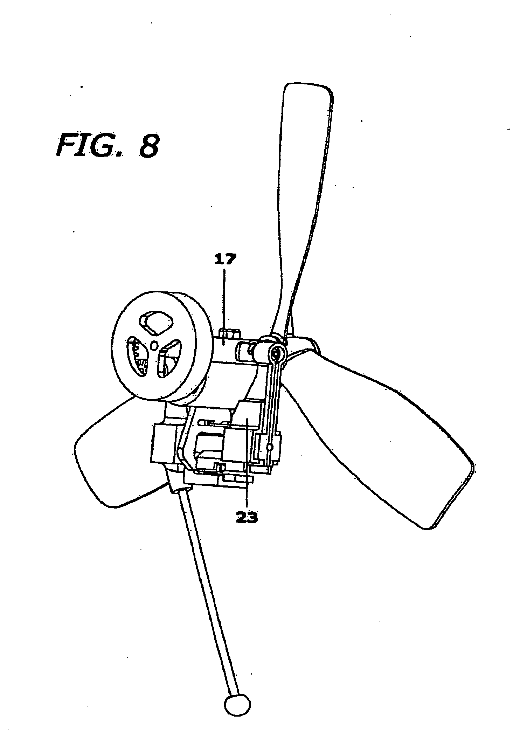

Figure 8 represents a variant of Figure 5;

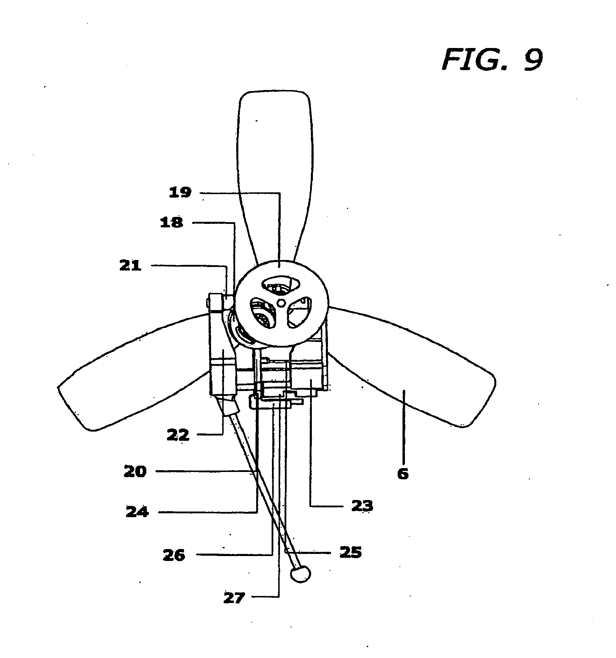

Figure 9 represents a different view of the tail rotor of Figure 8;

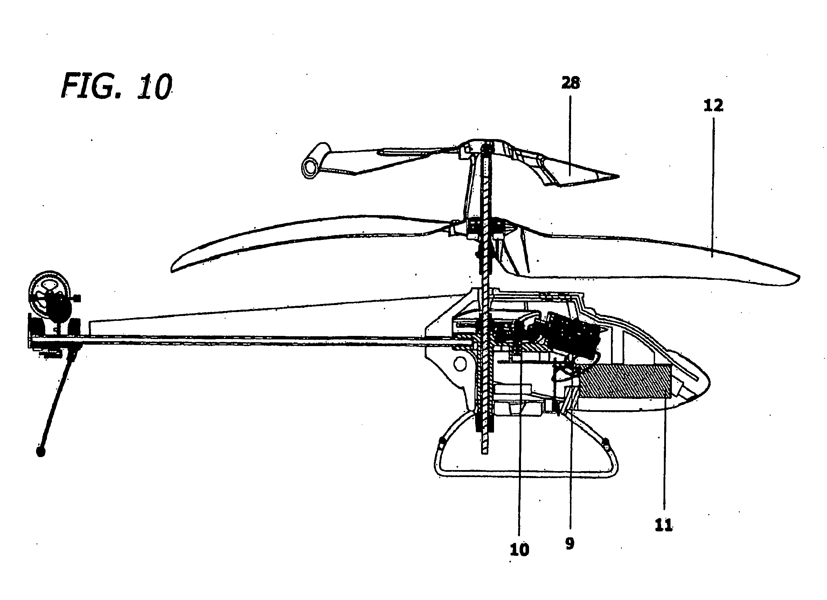

Figure 10 represents a section of the helicopter;

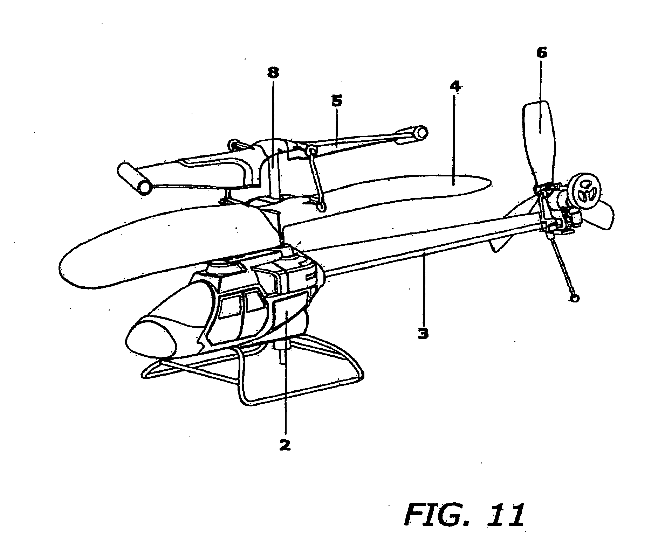

Figure 11 schematically represents an alternative view of the helicopter according to the disclosure in perspective;

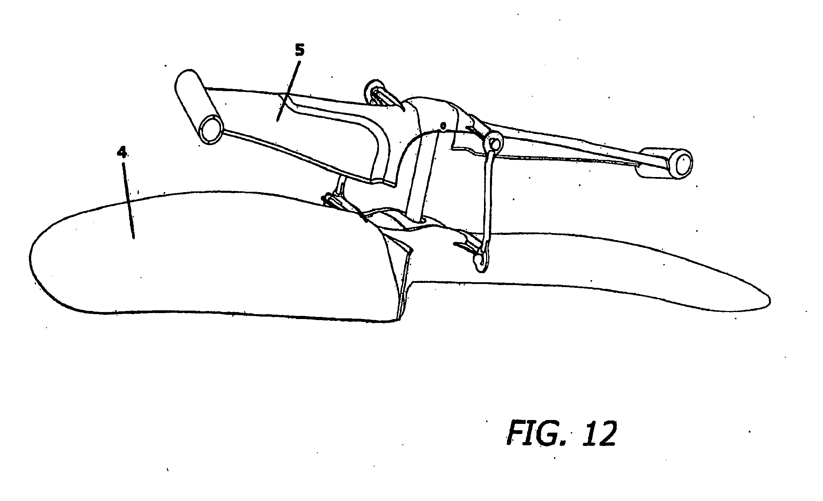

Figure 12 is a perspective view of the main rotor and auxiliary rotor.

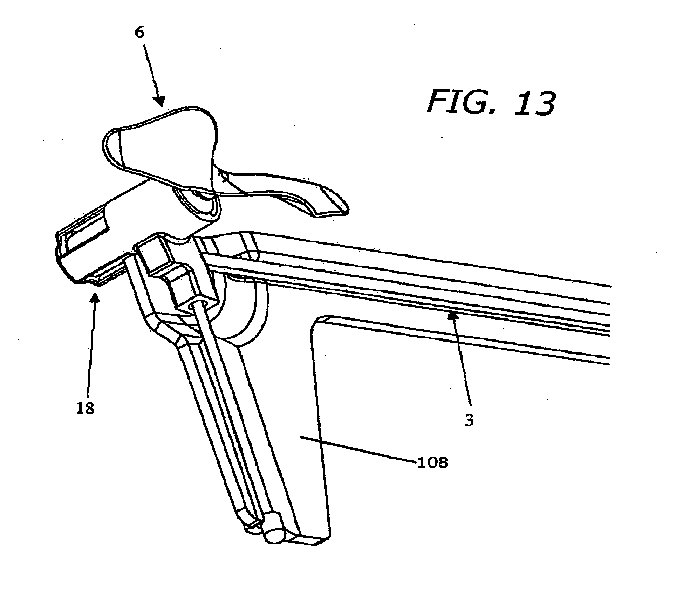

Figure 13 is a perspective view of the tail rotor and tail stabilizer in a second embodiment of the helicopter;

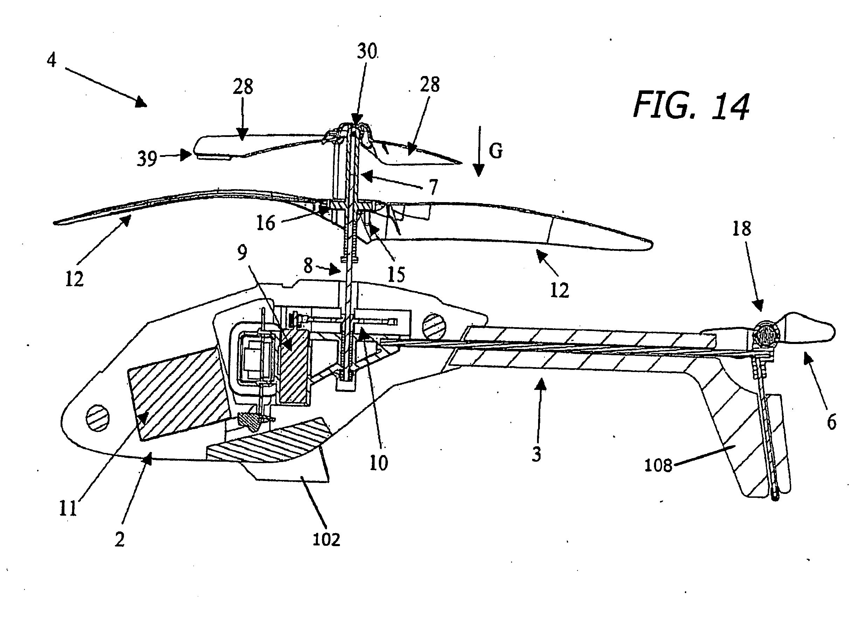

Figure 14 represents a side sectional view in the second embodiment of the helicopter;
Figures 15 represent a perspective view of the second embodiment of the helicopter;

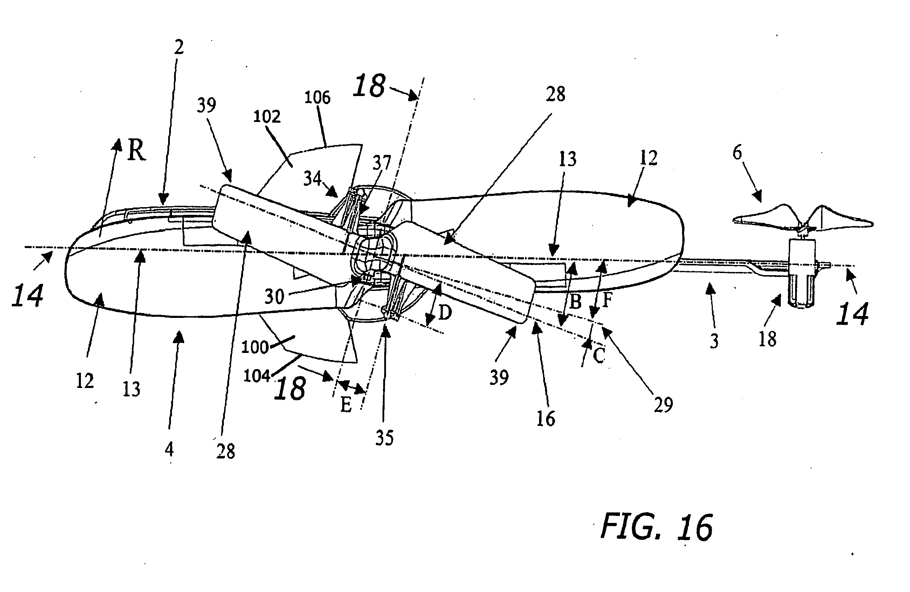

Figure 16 represents a top view of the second embodiment of the helicopter;

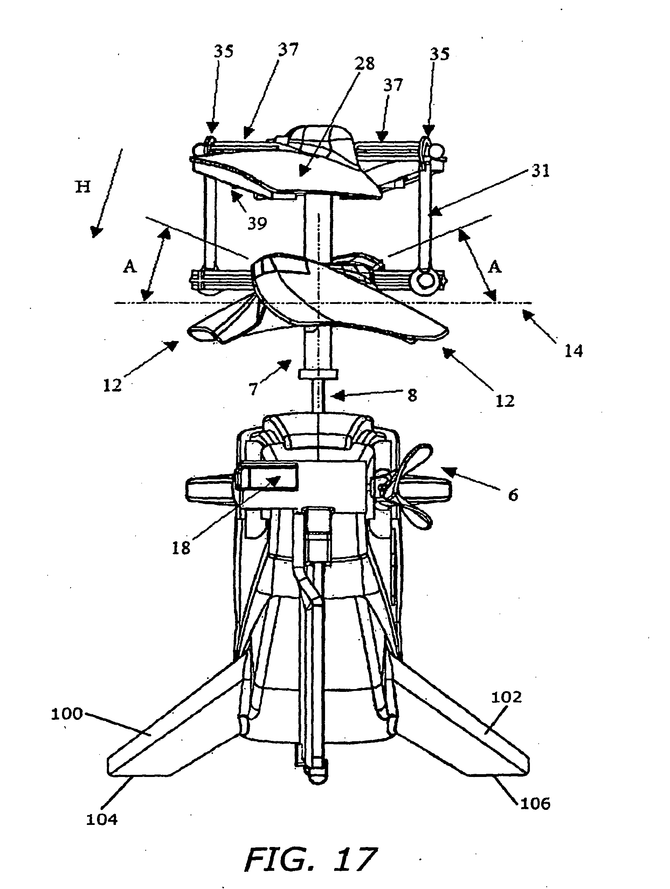

Figure 17 is a rear view of the second embodiment of the helicopter;

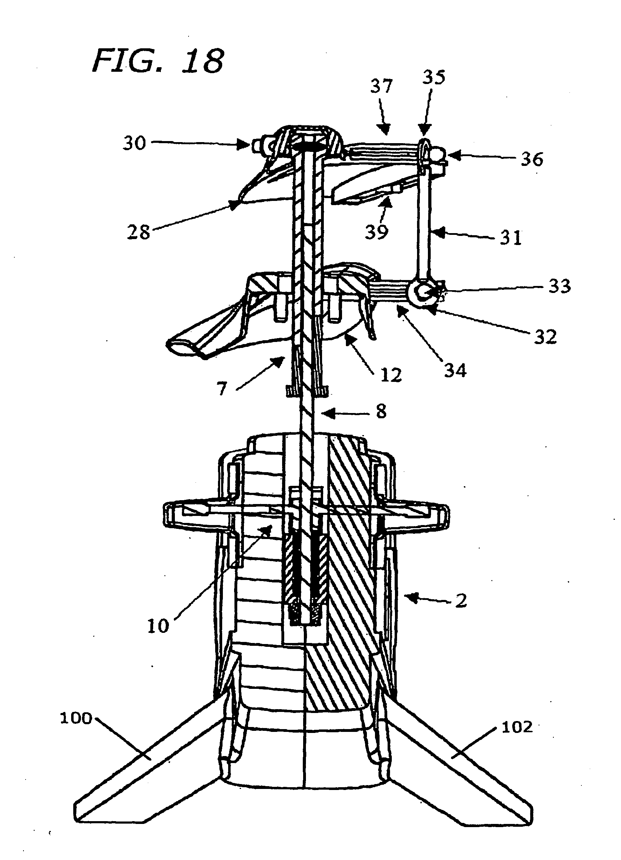

Figure 18 represents a sectional view of the second embodiment of the helicopter along line !8-!8 of Figure 16.

### DETAILED DESCRIPTION

The helicopter 1 represented in the figures by way of example is a remote-controlled helicopter which essentially consists of a body 2 with a landing gear and a tail 3; a main rotor 4; an auxiliary rotor 5 driven synchronously with the latter and a tail rotor 6.

The main rotor 4 is provided by means of what is called a rotor head 7 on a first upward directed rotor shaft 8 which is bearing-mounted in the body 2 of the helicopter 1 in a rotating manner and which is driven by means of a motor 9 and a transmission 10, whereby the motor 9 is for example an electric motor which is powered by a battery 11.

The main rotor 4 in this case has two propeller blades 12 which are in line or practically in line, but which may just as well be composed of a larger number of propeller blades 12.

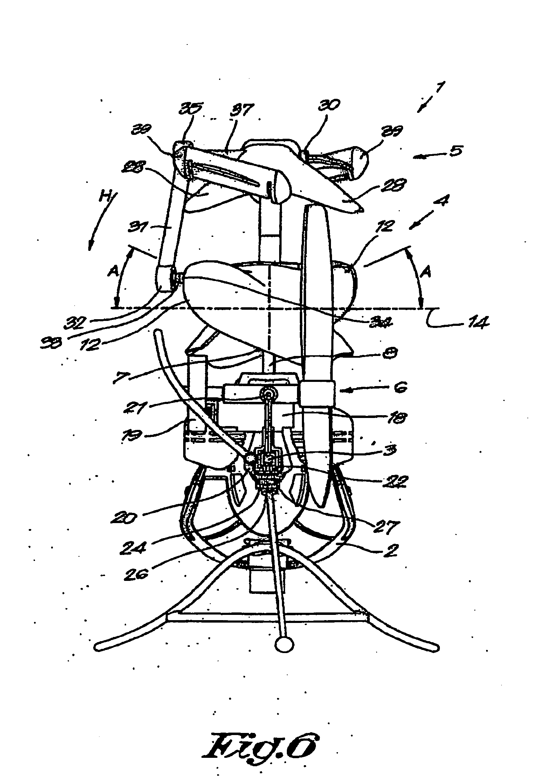

The tilt or angle of incidence A of the propeller blades 12, in other words the angle A which forms the propeller blades 12 as represented in figure 6 with the plane of rotation 14 of the main rotor 4, can be adjusted as, the main rotor 4 is hinge-mounted on this rotor shaft 8 by means of a joint, such that the angle between the plane of rotation of the main rotor and the rotor shaft may freely vary.

In the case of the example of a main rotor 4 with two propeller blades 12, the joint is formed by a spindle 15 of the rotor head 7.

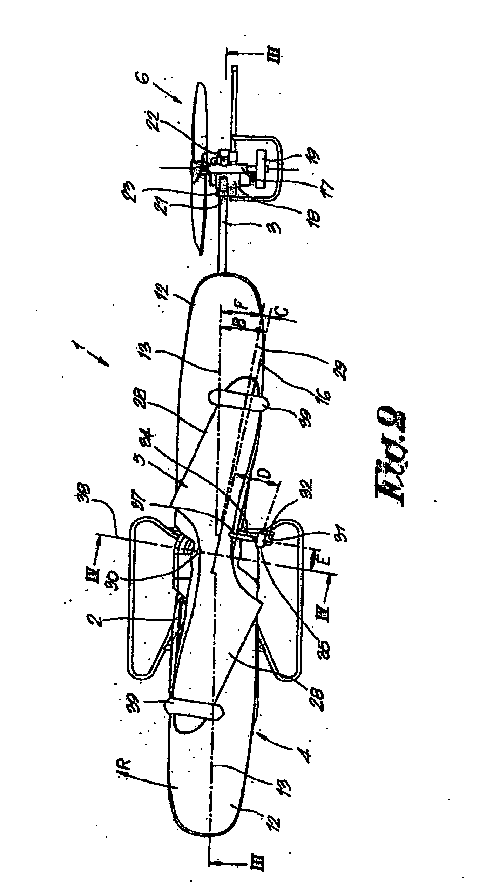

The axis 16 of this spindle 15 is directed transversal to the rotor shaft 8 and essentially extends in the direction of the longitudinal axis 13 of one of the propeller blades 12 and it preferably forms, as represented in figure 2, an acute angle B with this longitudinal axis 13.

The tail rotor 6 is driven via a second rotor shaft 17 by means of a second motor 18 and a transmission 19. Motor 16 can be an electric motor. The tail rotor 6 with its rotor shaft 17 and its drive 18-19 is suspended in a swing 20 which can rotate round a swing shaft 21 which is fixed to the tail 3 of the helicopter 1 by two supports 22 and 23.

The swing 20 is provided with an extension piece 24 towards the bottom, which is kept In a central position by means of a spring 25 when in a

On the lower end of the extension piece 24 of the swing 20 is provided a magnet 26, whereas opposite the position of the magnet 26 in the above-mentioned state of rest of the swing 20 is fixed a magnetic sensor 27 to the tail 3 which makes it possible to measure the relative angular displacement of the swing 20 and thus of the tail rotor 6 round the swing shaft 21.

It is clear that this angular displacement of the swing 20 can also be measured in other ways, for example by means of a potentiometer.

The measured signal can be used as an input signal 'for a control box, which is not represented in the figures, which controls the drives of the main rotor 4 and of the tail rotor 6 and which is provided with a stabilizer algorithm which will give a counter steering command when a sudden unwanted angular displacement of the tail rotor 6 is measured round the swing shaft 21, resulting from an unwanted rotation of the helicopter 1 round the rotor shaft 8, so as to restore the position of the helicopter 1.

The helicopter 1 is also provided with an auxiliary rotor 5 which is driven substantially synchronously with the main rotor 4 by the same rotor shaft 8 and the rotor head 7.

The auxiliary rotor 5 in this case has two vanes 28 which are 'essentially in line with their longitudinal axis 29. whereby the longitudinal axis 29, seen in the sense of rotation R of the main rotor 4, encloses a relatively small acute angle C with the longitudinal axis 13 of propeller blades 12 of the main rotor 4, so that both rotors 4 and 5 extend more or less parallel on top of one another with their propeller blades 12 and vanes 28 so to say.

The diameter of the auxiliary rotor 5 is preferably smaller than the diameter of the main rotor 4 as the vanes 28 have a smaller span than the propeller blades 12, and the vanes, 28 are substantially rigidly connected to each other. This rigid whole forming the auxiliary rotor 5 is provided in a swinging manner on an oscillating shaft 30 which is fixed to the rotor head 7 of the rotor shaft 8. This is directed transversally to the longitudinal axis of the vanes 28 and transversally to the rotor shaft 8.

The main rotor 4 and the auxiliary rotor 5 are connected to each other by a mechanical link which is such of the auxiliary rotor 5 the angle of incidence A of at least one of the propeller blades 12 of the main rotor 4. In the given example this link is formed of a rod 31.

This rod 31 is hinge-mounted to a propeller blade 12 of the main rotor 4 with one fastening point 32 by means of a joint 33 and a lever arm 34 and with another second fastening point 35 situated at a distance from the latter, it is hinge-mounted to a vane 28 of the auxiliary rotor 5 by means of a second joint 36 and a second lever arm 37.

The fastening point 32 on the main rotor 4 is situated at a distance D from the axis 16 of the spindle 15 of the propeller blades 12 of the main rotor 4, whereas the other fastening point 35 on the auxiliary rotor 5 is situated at a distance E from the axis 38 of the oscillatory shaft 30 of the auxiliary rotor 5.

The distance D is preferably larger than the distance E, and about the double of this distance E, and both fastening points 32 and 35 of the rod 31 are situated, seen in the sense of rotation R on the same side of the propeller blades 12 of the main rotor 4 or of the vanes 28 of the auxiliary rotor 5, in other words they are both situated in front of or at the back of the propeller blades 12 and vanes 28, seen in the sense of rotation.

Also preferably, the longitudinal axis 29 of the vanes 28 of the auxiliary rotor 5, seen in the sense of rotation R, encloses an angle F with the longitudinal axis 13 of the propeller blades 12 of the main rotor 4, which enclosed angle F is in the order, of magnitude of about 10°, whereby the longitudinal axis 29 of the vanes 28 leads the longitudinal axis 13 of the propeller blades 12, seen in the sense of rotation R. Different angles in a range of, for example, 5° to 25° could also be in order.

The auxiliary rotor 5 is provided with two stabilizing weights 39 which are each fixed to a vane 28 at a distance from the rotor shaft 8.

Further, the helicopter 1 is provided with a receiver, so that it can be controlled from a distance by means of a remote control which is not represented.

As a function of the type of helicopter, it is possible to search for the most appropriate values and relations of the angles B, F and G by experiment; the relation between the distances D and E; the size of the weights 39 and the relation of the diameters between the main rotor 4 and the auxiliary rotor 5 so as to guarantee a maximum auto stability.

The operation of the improved helicopter 1 according to the disclosure is as follows:

In flight, the rotors 4, 5 and 6 are driven at a certain speed, as a result of which a relative air stream is created in relation to the rotors, as a result of which the main rotor 4 generates an upward force so as to make the helicopter 1 rise or descend or maintain it at a certain height, and the tail rotor 6 develops a laterally directed force which is used to steer the helicopter 1.

It is impossible for the main rotor 4 to adjust itself, and it will turn in the plane 14 in which it has been started, usually the horizontal plane. Under the influence of gyroscopic precession, turbulence and other factors, it will take up an arbitrary undesired position if it is not controlled.

The surface of rotation of the auxiliary rotor 5 may take:
up another inclination in relation to the surface of rotation 14 of the main rotor 8, whereby both rotors 5 and 4 may take up another inclination in relation to the rotor, shaft 8.

This difference in inclination may originate in any internal or external force or disturbance whatsoever.

In a situation whereby the helicopter 1 is hovering stable, on a spot in the air without any disturbing internal or external forces, the auxiliary rotor 5 keeps turning in a plane which is essentially perpendicular to the rotor shaft 8.

If, however, the body 2 is pushed out of balance due to any disturbance whatsoever, and the rotor shaft 8 turns away from its position of equilibrium, the auxiliary rotor 5 does not immediately follow this movement, since the auxiliary rotor 5 can freely move round the oscillatory shaft 30.

The main rotor 4 and the auxiliary rotor 5 are placed in relation to each other in such a manner that a swinging motion of the auxiliary rotor 5 is translated almost immediately in the pitch or angle of incidence A of the propeller blades 12 being adjusted.

For a two-bladed main rotor 4, this means that the propeller blades 12 and the vanes 28 of both rotors 4 and 5 must, seen in the sense of rotation R, enclose an acute angle with one another of for example 10° in the case of a large main rotor 4 and a smaller auxiliary rotor 5.

This angle can be calculated or determined by experiment for any helicopter 1 or per type of helicopter.

If the axis of rotation 8 takes up another inclination than the one which corresponds to the above-mentioned position of equilibrium in a situation whereby the helicopter 1 is hovering, the following happens:

A first effect is that the auxiliary rotor 5 will first try to preserve its absolute inclination, as a result of which the relative inclination of the surface of rotation of the auxiliary rotor 5 in relation to the rotor shaft 8 changes.

As a result, the rod 31 will adjust the angle of incidence A of the propeller blades 12, so that the upward force of the propeller blades 12 will increase on one side of the main rotor 4 and will decrease on the diametrically opposed side of this main rotor.

Since the relative position of the main rotor 4 and the auxiliary rotor 5 are selected such that a relatively immediate effect is obtained. This change in the upward force makes sure that the rotor shaft 8 and the body 21 are forced back into their original position of equilibrium.

A second effect is that, since the distance between the far ends of the vanes 28 and the plane of rotation 14 of the main rotor 4 is no longer equal and since also the vanes 28 cause an upward force, a larger pressure is created between the main rotor 4 and the auxiliary rotor 5 on one side of the main rotor 4 than on the diametrically opposed side.

A third effect plays a role when the helicopter begins to tilt over to the front, to the back or laterally due to a disturbance. Just as in the case of a pendulum, the helicopter will be inclined to go back to its original situation. This pendulum effect does not generate any destabilizing gyroscopic forces as with the known helicopters that are equipped with a stabilizer bar directed transversally to the propeller blades of the main rotor. It acts to reinforce the first and the second effect.

The effects have different origins but have analogous natures. They reinforce each other so as to automatically correct the position of equilibrium of the helicopter 1 without any intervention of a pilot.

The tail rotor 6 is located in a swinging manner and provides for an additional stabilization and makes it possible for the tail rotor 6 to assume the function of the gyroscope which is often used in existing helicopters, such as model helicopters.

In case of a disturbance, the body 2 may start to turn round the rotor shaft 8. As a result, the tail rotor 6 turns at an angle in one or other sense round the swinging shaft 21. This is due to the gyroscopic precession which acts on the rotating tail rotor 6 as a result of the rotation of the tail rotor 6 round the rotor shaft 8. The angular displacement is a function of the amplitude of the disturbance and thus of the rotation of the body 2 round the rotor shaft 8. This is measured by the sensor 27.

The signal of the sensor 27 is used by a control box of a computer to counteract the failure and to adjust the thrust of the tail rotor 6 so as to annul the angular displacement of the tail rotor 6 which is due to the disturbance.

This can be done by adjusting the speed of the tail rotor 6 and/or by adjusting the angles of incidence of the propeller blades of the tail rotor 6, depending on the type of helicopter 1.

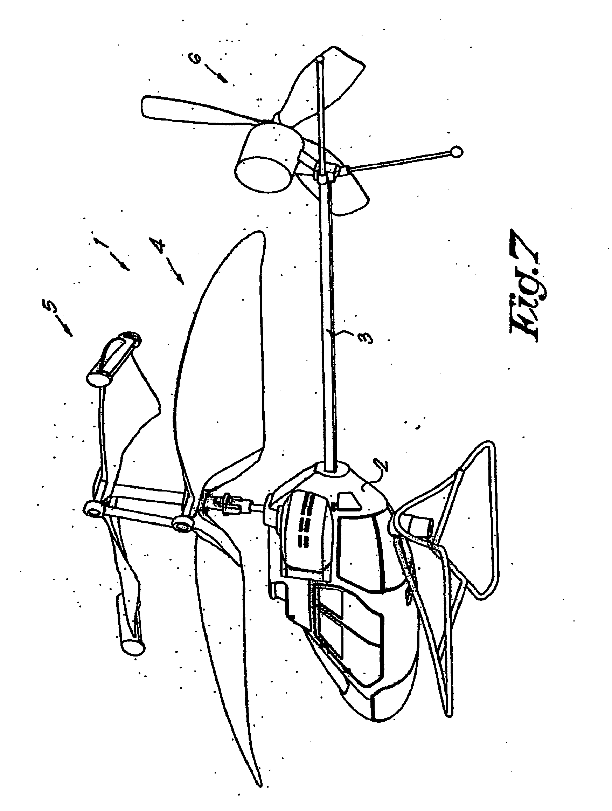

If necessary, this aspect of the disclosure may be applied separately, just as the aspect of the auxiliary rotor 5 can be applied separately, as is illustrated for example by means of figure 7, which represents a helicopter 1 according to the , disclosure having a main rotor 4 combined with an auxiliary rotor 5, but whose tail rotor 6 is of the conventional type, i.e. whose shaft cannot turn in a swing but is bearing-mounted in relation to the tail 3.

In practice, the combination of both aspects makes it possible to produce a helicopter which is very stable in any direction and any flight situation and which is easy to control, even by persons having little or no experience.

It is clear that the main rotor 4 and the auxiliary rotor 5 must not necessarily be made as a rigid whole. The propeller blades 12 and the vanes 28 can also be provided on the rotor head 7 such that they are mounted and can rotate relatively separately. In that case, for example, two rods 31 may be applied to connect each time one propeller blade 12 to one vane 28.

It is also clear that, if necessary, the joints and hinge joints may also be realized in other ways than the ones represented, for example by means of torsion-flexible elements.

In the case of a main rotor 4 having more than two propeller blades 12, one should preferably be sure that at least one propeller blade 12, the joint of the main rotor 4 is made as a spindle 15 which is directed essentially transversely to the axis of the oscillatory shaft 30 of the auxiliary rotor 5 and which essentially extends in the longitudinal direction of the one propeller blade 12 concerned which is essentially parallel to the vanes 28.

In another format, the helicopter comprises a body with a tail; a main rotor with propeller blades which is driven by a rotor shaft on which the blades are mounted. A tail rotor is driven by a second rotor shaft directed transversally to the rotor shaft of the main rotor. An auxiliary rotor is driven by the rotor shaft of the main rotor and is provided with vanes from the rotor shaft in the sense of rotation of the main rotor.

The auxiliary rotor is mounted in a swinging relationship on an oscillatory shaft and the swinging motion being relatively upwardly and downwardly about the auxiliary shaft. The auxiliary shaft is provided essentially transverse to the rotor shaft of the main rotor. The main rotor and the auxiliary rotor are connected to each other by a mechanical link, such that the swinging motion of the auxiliary rotor controls the angle of incidence of at least one of the propeller blades of the main rotor.

The angle of incidence of the rotor in the plane of rotation of the rotor and the rotor shaft may vary. An auxiliary rotor rotatable with the rotor shaft is for relative oscillating movement about the rotor shaft. Different relative positions are such that the auxiliary rotor causes the angle of incidence the main rotor to be different. A linkage between the main and auxiliary rotor causes changes in the position of the auxiliary rotor to translate to changes in the angle of incidence.

The propeller blades of the main rotor and the vanes of the auxiliary rotor respectively are connected to each other with a mechanical linkage that permits the relative movement between the blades of the propeller and the vanes of the auxiliary rotor. A joint of the main rotor to the propeller blades is formed of a spindle which is fixed to the rotor shaft of the main rotor.

The mechanical link includes a rod hinge mounted to a vane of the auxiliary rotor with one fastening point and is hinge-mounted with another fastening point to the propeller blade of the main rotor.

The body includes wings directed transversely of a longitudinal axis of the helicopter body. The wings are 100 and 102 directed transversely and downwardly whereby the tips 104 and 106 of the wings permit for stabilizing the helicopter body when on the ground.

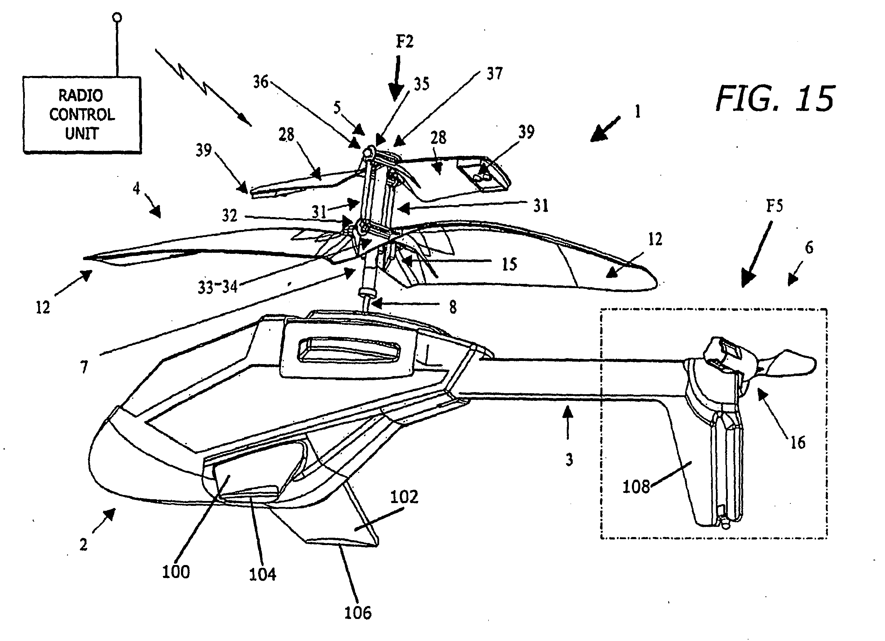

There is a downwardly directed stabilizer 108 at the tail of the helicopter. Figure 15 also shows a radio control unit for operation with the helicopter. This unit can have appropriate computerized controls for signaling the operation of the motors operating the rotors and their relative positions.

The present disclosure is not limited to the embodiments described as an example and represented in the accompanying figures. Many different variations in size and scope and features are possible. For instance, instead of electrical motors being provided others forms of motorized power are possible. A different number of blades may be provided to the rotors.

A helicopter according to the disclosure can be made in all sorts of shapes and dimensions while still remaining within the scope of the disclosure. In this sense although the helicopter in some senses has been described as toy or model helicopter, the features described and illustrated can have use in part or whole in a full-scale helicopter.

## Claims

1. A remote control toy helicopter (1) comprising a body (2) with a tail (3), a motor (9) and a battery for the motor (9), the motor (9) being controllable by a controller remote from the body (2); a main rotor (4) with at least two propeller blades (12), wherein the propeller blades (12) define a plane of rotation of the main rotor (4), wherein the main rotor (4) is driven by a rotor shaft (8), on which the propeller blades (12) are mounted; a tail rotor (6) driven by a second rotor shaft (17) directed transversely to the rotor shaft (8) of the main rotor (4); an auxiliary rotor (5) provided with two vanes (28) and driven by the rotor shaft (18) of the main rotor (4) in the rotational sense of the main rotor (4), wherein auxiliary rotor (5) has a first longitudinal axis (29) running along a line of the auxiliary rotor (5) which runs through the rotor shaft (8), and wherein the main rotor (4) has a second longitudinal axis (13) extending from the end of one of the propeller blades (12) towards the rotor shaft (8), the auxiliary rotor (5) being mounted such that the first longitudinal axis (29) is situated in an acute angle relative to the second longitudinal axis (13), the acute angle being determined when viewed from above the plane of rotation, the auxiliary rotor (4) having a further plane of rotation being spaced from the plane of rotation, the main rotor (4) and the auxiliary rotor (5) being linked with each other by a mechanical linkage (31), such that the auxiliary rotor (5) is mounted in a swinging relationship on an oscillatory shaft (30) provided essentially transversally to the rotor shaft (8) of the main rotor (4) and being directed essentially transversally to the longitudinal axis of the vanes (28) and the swinging motion being relatively upwards and downwards around the oscillatory shaft (30), such that the swinging motion of the auxiliary rotor (5) controls an angle of incidence of the propeller blades (12) of the main rotor (4) **characterized in that** the main rotor (4) is a rigid whole, wherein the main rotor (4) is mounted pivotably on a joint formed by a spindle (15) which is fixed on the rotor shaft (8) of the main rotor (40) and extends along the second longitudinal axis (13) of the main rotor (4), and **in that** the first longitudinal axis (29) of the vanes (28), of the auxiliary rotor (5) in the sense of rotation (R), is located within an angle of 5 to 25 degrees, preferably approximately 10 degrees, with the second longitudinal axis (13) of one of the propeller blades (12) of the main rotor (4).

2. A helicopter according to claim 1 wherein the propeller blades (12) of the main rotor (4) are essentially in line with each other.

3. A helicopter according to either claim 1 or claim 2 wherein there is a single plane of rotation of the main rotor (4) is defined by the plane of rotation of the second longitudinal axis (13) running through the spindle (15).

4. A helicopter according to any one of claims 1 to 3 wherein the two vanes (28) each have a convex curved upper surface from a leading edge to a trailing edge thereof and a concave lower surface that is complementary in shape to the upper surface, extending essentially in accordance with the first longitudinal axis (29).

5. A helicopter according to anyone of claim 1 to 4 wherein the first longitudinal axis (29) of the vanes (28), is in the sense of rotation (R) in front of the second longitudinal axis (13) of the propeller blades (12).

6. A helicopter according to anyone of claims 1 to 5 wherein the auxiliary rotor (5) is a rigid whole mounted pivotably around the oscillatory shaft (30).

7. A helicopter according to claim 5 wherein the vanes (28), of the auxiliary rotor extend essentially straight along the first longitudinal axis (29) rigidly connected with each other.

8. A helicopter according to anyone of claims 1 to 7 wherein the main rotor (4) is a unitary one piece body.

9. A helicopter according to anyone of claims 1 to 8 wherein the rotor shaft (8) extends through an aperture in the main rotor (4).

10. A helicopter according to anyone of claims 1 to 9 wherein the plane of rotation of the auxiliary rotor (5) is above the plane of rotation of the main rotor (4).

11. A helicopter according to anyone of claims 1 to 10 wherein each propeller blade (12) has an upper surface formed in the form of an upwardly convex curve, running from essentially a tip of the propeller blade (10) towards the rotor shaft (8), and wherein each of the propeller blades (12) has a substantially convex upper surface along the second longitudinal axis (13), the upper surface being convex from a leading edge to a trailing edge of the blade, and wherein each propeller blade (12) has a substantially concave lower surface along the second longitudinal axis and the lower surface being concave from the leading edge to the trailing edge of the blade.

## Patentansprüche

1. Ferngesteuerter Spielzeug-Helikopter (1), mit einem Grundkörper (2) mit einem Heck (3), mit einem Motor (9) und mit einer Batterie für den Motor (9), wobei der Motor (9) durch eine Steuerung steuerbar ist, die von dem Grundkörper (2) entfernt angeordnet ist; mit einem Hauptrotor (4), der zumindest zwei Rotorblätter (12) aufweist, wobei die Rotorblätter (12) eine Rotationsebene des Hauptrotors (4) definieren, wobei der Hauptrotor (4) durch eine Rotorachse (8) angetrieben ist, an der die Rotorblätter (12) montiert sind; mit einem Heckrotor (6), der durch eine zweite Rotorachse (17) angetrieben ist, die transversal zu der Rotorachse (8) des Hauptrotors (4) ausgerichtet ist; mit einem Hilfsrotor (5), der mit zwei Schaufeln (28) versehen ist und der durch die Rotorachse (8) des Hauptrotors (4) im Drehsinn des Hauptrotors (4) angetrieben ist, wobei der Hilfsrotor (5) eine erste Längsachse (29) hat, die entlang einer Linie des Hilfsrotors (5) verläuft, die durch die Rotorachse (8) verläuft, und wobei der Hauptrotor (4) eine zweite Längsachse (13) hat, die sich von einem Ende von einem der Rotorblätter (12) in Richtung der Rotorachse (8) erstreckt, wobei der Hilfsrotor (5) derart montiert ist, dass die erste Längsachse (29) sich in einem spitzen Winkel relativ zu der zweiten Längsachse (13) befindet, wobei der spitze Winkel bestimmt wird, wenn man von oberhalb auf die Rotationsebene blickt, sowie der Hilfsrotor (5) eine weitere Rotationsebene hat, die von der Rotationsebene beabstandet ist, wobei der Hauptrotor (4) und der Hilfsrotor (5) durch eine mechanische Verbindung (31) miteinander verbunden sind, so dass der Hilfsrotor (5) in einer schwingenden Relation an einer oszillierenden Achse (30) montiert ist, die im Wesentlichen transversal zu der Rotorachse (8) des Hauptrotors (4) und die im Wesentlichen transversal zu der Längsachse der Schaufeln (28) ausgerichtet ist, und wobei die schwingende Bewegung relativ aufwärts und abwärts rund um die oszillierende Achse (30) ist, so dass die schwingende Bewegung des Hilfsrotors (5) einen Ereigniswinkel der Rotorblätter (12) des Hauptrotors (4) steuert, **dadurch gekennzeichnet, dass** der Hauptrotor (4) ein steifes Ganzes ist, wobei der Hauptrotor (4) verschwenkbar an einem Gelenk montiert ist, welches durch eine Spindel (15) ausgebildet ist, die an der Rotorachse (8) des Hauptrotors (4) fixiert ist und die sich entlang der zweiten Längsachse (13) des Hauptrotors (4) erstreckt, und **dass** die erste Längsachse (29) der Schaufeln (28) des Hilfsrotors (5) im Drehsinn (R) innerhalb eines Winkels von 5 bis 25 Grad, vorzugsweise 10 Grad, mit Bezug zu der zweiten Längsachse (13) von einem der Rotorblätter (12) des Hauptrotors (4) angeordnet ist.

2. Helikopter nach Anspruch 1, wobei die Rotorblätter (12) des Hauptrotors (4) im Wesentlichen in einer Linie zueinander ausgerichtet sind.

3. Helikopter nach Anspruch 1 oder 2, wobei eine einzige Rotationsebene des Hauptrotors (4) durch die Rotationsebene der zweiten Längsachse (13) definiert ist, die durch die Spindel (15) verläuft.

4. Helikopter nach irgendeinem der Ansprüche 1 bis 3, wobei die beiden Schaufeln (28) jeweils eine konvex gekrümmte obere Oberfläche von einer führenden Kante zu einer nachlaufenden Kante daran aufweisen und eine konkave untere Oberfläche haben, die in der Form komplementär zu der oberen Oberfläche ist, und die sich im Wesentlichen in Übereinstimmung mit der ersten Längsachse (29) erstrecken.

5. Helikopter nach irgendeinem der Ansprüche 1 bis 4, wobei die erste Längsachse (29) der Schaufeln (28) im Drehsinn (R) vor der zweiten Längsachse (13) der Rotorblätter (12) liegt.

6. Helikopter nach irgendeinem der Ansprüche 1 bis 5, wobei der Hilfsrotor (5) ein steifes Ganzes ist, und welcher verschwenkbar rund um die oszillierende Achse (30) montiert ist.

7. Helikopter nach Anspruch 5, wobei sich die Schaufeln (28) des Hilfsrotors im Wesentlichen gerade entlang der ersten Längsachse (29) erstrecken und steif miteinander verbunden sind.

8. Helikopter nach irgendeinem der Ansprüche 1 bis 7, wobei der Hauptrotor (4) einen einstückigen Körper aufweist.

9. Helikopter nach irgendeinem der Ansprüche 1 bis 8, wobei sich die Rotorachse (8) durch eine Öffnung in dem Hauptrotor (4) hindurch erstreckt.

10. Helikopter nach irgendeinem der Ansprüche 1 bis 9, wobei die Rotationsebene des Hilfsrotors 85) oberhalb der Rotationsebene des Hauptrotors (4) liegt.

11. Helikopter nach irgendeinem der Ansprüche 1 bis 10, wobei jedes Rotorblatt (12) eine obere Oberfläche hat, die in der Form einer nach oben gekrümmten konvexen Kurve verläuft, ausgehend von im Wesentlichen der Spitze des Rotorblattes (10) in Richtung der Rotorachse (8), und wobei jedes der Rotorblätter (12) eine im Wesentlichen konvexe obere Oberfläche hat, entlang der zweiten Längsachse (13), wobei die obere Oberfläche von einer führenden Kante aus in Richtung der nachlaufenden Kante des Blattes konvex ausgebildet ist, und wobei jedes Rotorblatt (12) eine im Wesentlichen konkave untere Oberfläche hat, entlang der zweiten Längsachse und wobei die untere Oberfläche von einer führenden Kante aus in Richtung der nachlaufenden Kante des Blattes konkav ausgebildet ist.

## Revendications

1. Hélicoptère d'aéromodélisme télécommandé (1) comprenant un corps (2) doté d'une queue (3), un moteur (9) et une batterie pour le moteur (9), le moteur (9) pouvant être commandé par une commande située à distance du corps (2) ; un rotor principal (4) doté d'au moins deux pales d'hélice (12), les pales d'hélice (12) définissant un plan de rotation du rotor principal (4), le rotor principal (4) étant entraîné par un arbre de rotor (8), sur lequel les pales d'hélice (12) sont montées ; un rotor de queue (6) entraîné par un second arbre de rotor (17) dirigé transversalement à l'arbre de rotor (8) du rotor principal (4) ; un rotor auxiliaire (5) doté de deux lames (28) et entraîné par l'arbre de rotor (18) du rotor principal (4) dans le sens de rotation du rotor principal (4), le rotor auxiliaire (5) ayant un premier axe longitudinal (29) s'étendant le long d'une ligne du rotor auxiliaire (5) qui passe au travers de l'arbre de rotor (8), et le rotor principal (4) a un second axe longitudinal (13) s'étendant depuis l'extrémité de l'une des pales d'hélice (12) en direction de l'arbre de rotor (8), le rotor auxiliaire (5) étant monté de telle sorte que le premier axe longitudinal (29) forme un angle aigu avec le second axe longitudinal (13), l'angle aigu étant défini en observant le plan de rotation depuis le haut, le rotor auxiliaire (4) ayant un autre plan de rotation espacé du plan de rotation, le rotor principal (4) et le rotor auxiliaire (5) étant reliés l'un à l'autre par une liaison mécanique (31), de sorte que le rotor auxiliaire (5) est monté dans une relation d'oscillation sur un arbre oscillant (30) placé sensiblement transversalement à l'arbre de rotor (8) du rotor principal (4) et étant dirigé sensiblement transversalement à l'axe longitudinal des lames (28) et le mouvement d'oscillation se faisant relativement vers le haut et vers le bas autour de l'arbre oscillant (30), de sorte que le mouvement d'oscillation du rotor auxiliaire (5) contrôle un angle d'incidence des pales d'hélice (12) du rotor principal (4), **caractérisé en ce que** le rotor principal (4) est une unité rigide, le rotor principal (4) étant monté, de façon à pouvoir pivoter, sur une articulation formée par une broche (15) qui est fixée sur l'arbre de rotor (8) du rotor principal (4) et qui s'étend le long du second axe longitudinal (13) du rotor principal (40), et **en ce que** le premier axe principal (29) des lames (28), du rotor auxiliaire (5) dans le sens de rotation (R), forme un angle de 5 à 25 degrés, de préférence d'environ 10 degrés, par rapport au second axe longitudinal (13) de l'une des pales d'hélice (12) du rotor principal (4).

2. Hélicoptère selon la revendication 1, dans lequel les pales d'hélice (12) du moteur principal (4) sont sensiblement alignées l'une avec l'autre.

3. Hélicoptère selon la revendication 1 ou la revendication 2, dans lequel il n'y a qu'un seul plan de rotation du rotor principal (4) qui est défini par le plan de rotation du second axe longitudinal (13) passant par au travers de la broche (15).

4. Hélicoptère selon l'une quelconque des revendications 1 à 3, dans lequel les deux lames (28) ont chacune une surface supérieure incurvée convexe allant d'un bord avant à un bord arrière et une surface inférieure concave dont la forme est complémentaire à celle de la surface supérieure, s'étendant sensiblement suivant le premier axe longitudinal (29).

5. Hélicoptère selon l'une quelconque des revendications 1 à 4, dans lequel le premier axe longitudinal (29) des lames (28) est dans le sens de rotation (R) devant le second axe de longitudinal (13) des pales d'hélice (12).

6. Hélicoptère selon l'une quelconque des revendications 1 à 5, dans lequel le rotor auxiliaire (5) est une unité rigide montée de façon à pouvoir pivoter autour de l'arbre oscillant (30).

7. Hélicoptère selon la revendication 5, dans lequel les lames (28) du rotor auxiliaire s'étendent de façon sensiblement rectiligne suivant le premier axe longitudinal (29) en étant connectées rigidement l'une à l'autre.

8. Hélicoptère selon l'une quelconque des revendications 1 à 7, dans lequel le rotor principal (4) est un corps unitaire d'une seule pièce.

9. Hélicoptère selon l'une quelconque des revendications 1 à 8, dans lequel l'arbre de rotor (8) s'étend au travers d'une ouverture ménagée dans le rotor principal (4).

10. Hélicoptère selon l'une quelconque des revendications 1 à 9, dans lequel le plan de rotation du rotor auxiliaire (5) est situé au-dessus du plan de rotation du rotor principal (4).

11. Hélicoptère selon l'une quelconque des revendications 1 à 10, dans lequel chaque pale d'hélice (12) a une surface supérieure ayant la forme d'une courbe convexe vers le haut et s'étendant sensiblement d'une pointe de la pale d'hélice (10) vers l'arbre de rotor (8) et dans lequel chacune des pales d'hélice (12) a une surface supérieure sensiblement convexe qui s'étend suivant le second axe longitudinal (13), la surface supérieure étant convexe d'un bord avant vers un bord arrière de la pale, et dans lequel chaque pale d'hélice (12) présente une surface inférieure sensiblement concave qui s'étend suivant le second axe longitudinal et la surface inférieure étant concave du bord avant au bord arrière de la pale.
